# EUROPEAN PATENT APPLICATION

(11) **EP 1 161 057 A2**
(43) Date of publication of application: **05.12.2001**
(21) Application number: 01112060.7
(22) Date of filing: 25.05.2001
(51) Int. Cl.: H04L 29/12, H04L 12/56

(54) **Inter-network connection system**

(30) Priority: 25.05.2000 JP 2000154740
(71) Applicant: NEC CORPORATION, Tokyo (JP); NTT DoCoMo, Inc., Tokyo 100-6150 (JP)
(72) Inventor: Yanagisawa, Yukio, Minato-ku, Tokyo (JP); Tanimoto, Shigeo, Yokosuka-shi, Kanagawa (JP)
(74) Representative: VOSSIUS & PARTNER

(57) **Abstract**

In an inter-network connection system of the invention, an IP table is updated so that a physical transmission path where a fault is detected is bypassed. Therefore, after the fault occurs, a frame passing through the physical transmission path subjected to the fault is made to pass through a bypass. According as the frame arrives through the bypass, a MAC table is automatically updated such that the physical transmission path and logical channel used before the fault occurs is changed to a physical transmission path and logical channel corresponding to the bypass after the fault occurs. Alternatively, traffic measurement is performed so that a physical transmission path having a traffic amount exceeding a threshold value is bypassed.

## Description

The present invention is used for transmission and reception of information between different networks such as a private network and the Internet. In particular, the present invention relates to a technique for designing load dispersion of physical transmission paths and logical channels by using both layers, i.e., the MAC layer and the IP layer of a frame to be transmitted or received.

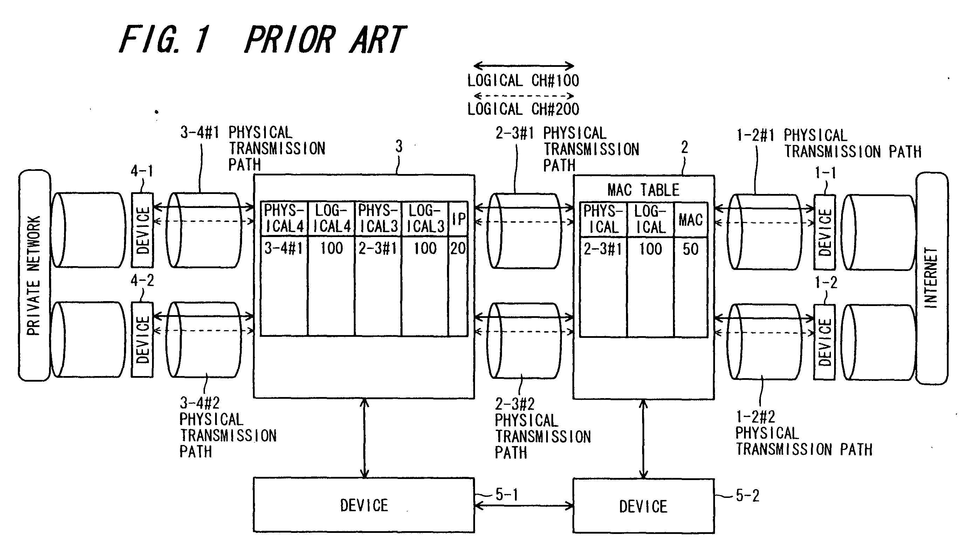

An inter-network connection system for connecting an external network such as the Internet and a private network to each other is popularly used. The inter-network connection system converts the forms of a frame to each other to transmit or receive information between networks having different forms, manages the correspondence between an IP address and a MAC address, or performs other operations. This prior art will be described below with reference to FIG. 1. FIG. 1 is a diagram showing the entire configuration of a conventional inter-network connection system.

As shown in FIG. 1, the inter-network connection system is dispersed into a plurality of devices depending on functions thereof, and the devices are connected to each other through physical transmission paths. Devices 1-1 and 1-2 are devices for terminating an Internet protocol, and have interfaces with the Internet. These devices have functions equivalent to those of general router to select devices 4-1 and 4-2 for performing processes for accessing a private network on the basis of the IP addresses frames transmitted from the Internet. The selected one of the devices 4-1 and 4-2 gives a corresponding destination MAC address to the frame to transmit the frame to the device 2, and transmits the frame received from the device 2 to the Internet.

The device 2 is a device for performing switching depending on a MAC address, and has a function equivalent to that of a general switching HUB. The device 2 forms a MAC table in which the correspondence between transmission source MAC addresses included in the device 1-1 and the device 1-2, a received physical transmission path 1-2#1 or 1-2#2, and logical channel #100 or #200 is recorded.

In addition, the device 2 records the correspondence between a transmission source MAC address included in a frame received from a device 3, a received physical transmission path 2-3#1 or 2-3#2, and logical channel #100 or #200 to form a MAC table.

The device 2 refers to the correspondences between the physical transmission paths 2-3#1 or 2-3#2 and the logical channels #100 and #200 on the basis of the destination MAC addresses of frames received from the devices 1-1 and 1-2 to select the physical transmission path 2-3#1 or 2-3#2 and the logical channel #100 or #200 of a transmission destination, and transmits the frame to the device 3 through the physical transmission path 2-3#1 or 2-3#2.

The device 2 refers to the correspondence between the physical transmission path 1-2#1 or 1-2#2 and the logical channel #100 or #200 on the basis of the destination MAC address of a frame received from the device 3 to select the physical transmission path 1-2#1 or 1-2#2 and the logical channel #100 or #200, and transmits the frame to the device 1-1 or 1-2. In this manner, the device 2 performs load dispersion by the MAC layer.

The device 3 selects the physical transmission paths 2-3#1 2-3#2, 3-4#1, and 3-4#2 and the logical channels #100 and #200. At least two physical interfaces are arranged between the device 3 and the device 2. One physical interface has a plurality of logical interfaces.

When a frame is received from the device 2, according to the physical transmission paths 2-3#1, 2-3#2 and the logical channels #100 and #200, and a destination IP address included in the received frame, the device 3 refers to the correspondences between the physical transmission paths 3-4#1 and 3-4#2, the logical channels #100 and #200, an IP address included in a frame received from the Internet, and the devices 4-1 and 4-2 to select the device 4-1 or 4-2. In this manner, the device 3 performs load dispersion by an IP layer.

The devices 4-1 and 4-2 are terminal devices for a private network protocol, and convert the form of a frame received from the device 3 into a form which can be transmitted to the private network to transmit the frame to the private network. In addition; devices 4-1 and 4-2 convert the frame of a frame received from the private network into a form which can be transmitted to the Internet to transmit the frame to the device 2.

In the inter-network connection system, in order to improve the reliability, the transmission path established between the device 2 and the device 3 is made duplex. When a device 5-1 detects a fault of the device 3, when a device 5-2 detects a fault of the device 2, or when a fault or faults are detected in one or both of the device 3 and the device 2, the devices 5-1 and 5-2 are synchronized with each other to switch the transmission paths.

In the conventional inter-network connection system described above, when switching control for a duplex structure arranged between the device 2 and the device 3 to improve the reliability is performed, the devices 5-1 and 5-2 must be synchronized with each other, and the control becomes complex.

Although a recovery procedure for fault is started after the faults are detected by both the devices 5-1 and 5-2, since some time is required to synchronize both the devices with each other, the start of the recovery procedure for fault is delayed. A frame transmitted or received may be lost for time corresponding to the delay.

The present invention has been achieved on the background described above, and it therefore is an object of the present invention to provide an inter-network connection system which can achieve recovery from a fault according to simple control for a short time. It is another object of the present invention to provide an inter-network connection system which can perform traffic measurement at one position and which can achieve dispersion of traffics according to a simple control for a short time.

According to an aspect of the present invention, an inter-network connection system comprises:

IP layer switching means for switching an arrival frame to a predetermined route according to an IP table in which a physical transmission path and a logical channel corresponding to an IP address are recorded; and MAC layer switching means for switching an arrival frame to a predetermined route according to a MAC table in which a physical transmission path and a logical channel corresponding to a MAC address are recorded, wherein a plurality of physical transmission paths are arranged between the IP layer switching means and the MAC layer switching means, the IP table includes means for, each time a frame from the MAC layer switching means arrives, updating self-table contents according to the IP address of the frame and the information of a physical transmission path and a logical channel through which the frame passes, the MAC table includes means for, each time a frame from the IP layer switching means arrives, updating self-table contents according to the MAC address of the frame and the information of a physical transmission path and a logical channel through which the frame passes, means for detecting fault generation of the plurality of physical transmission paths is arranged, and means for updating the IP table such that a physical transmission path in which a fault is detected according to the detection result is bypassed is arranged.

The IP layer switching means includes means for transmitting normality acknowledge signals passing through the plurality of physical transmission paths to the MAC layer switching means, the MAC layer switching means includes means for transmitting response signals of the normality acknowledge signals through physical transmission paths at which the normality acknowledge signals arrive, and the means for detecting fault generation can include means for checking the normality of the physical transmission path depending on the presence/absence of the response signal.

More specifically, the IP table is updated such that a physical transmission path in which a fault is detected is bypassed, so that a frame passing through the physical transmission path in which the fault is detected before the fault is generated passes through a bypass after the fault is generated.

In the MAC layer switching means, a frame arrives through a bypass, so that the MAC table is updated such that a MAC address which corresponds to a physical transmission path and a logical channel in which a fault is detected before the fault is generated corresponds to a physical transmission path and a logical channel corresponding to the bypass after the fault is generated.

Therefore, when the IP table is updated, the MAC table is automatically updated, a device for recovery from a fault need not be arranged in the MAC layer switching means. In this manner, detection of fault generation is performed at one position, and recovery from a fault can be achieved according to simple control for a short time.

In addition, in place of detection of fault generation of the plurality of physical transmission paths, traffic measurement of the plurality of physical transmission paths is performed, and control for dispersing traffic can also be performed such that a physical transmission path in which a traffic volume exceeding a threshold value is bypassed. In this manner, traffic measurement is performed at one position, dispersion of traffic can be achieved according to simple control for a short time.

The invention will be explained in more detail in conjunction with the appended drawings, wherein:
FIG. 1 is a block diagram showing a main part of a conventional inter-network connection system;
FIG. 2 is a block diagram showing a main part of an inter-network connection system according to an embodiment of the present invention;
FIG. 3 is a block diagram for explaining an operation performed with a flow of information from the Internet to a private network in the inter-network connection system according to the embodiment of the present invention;
FIG. 4 is a block diagram for explaining an operation performed with a flow of information from the private network to the Internet in the inter-network connection system according to the embodiment of the present invention;
FIG. 5 is a block diagram for explaining a fault detection operation of a physical transmission path performed by a normality acknowledge signal; and
FIG. 6 is a block diagram for explaining a switching operation of physical transmission paths.

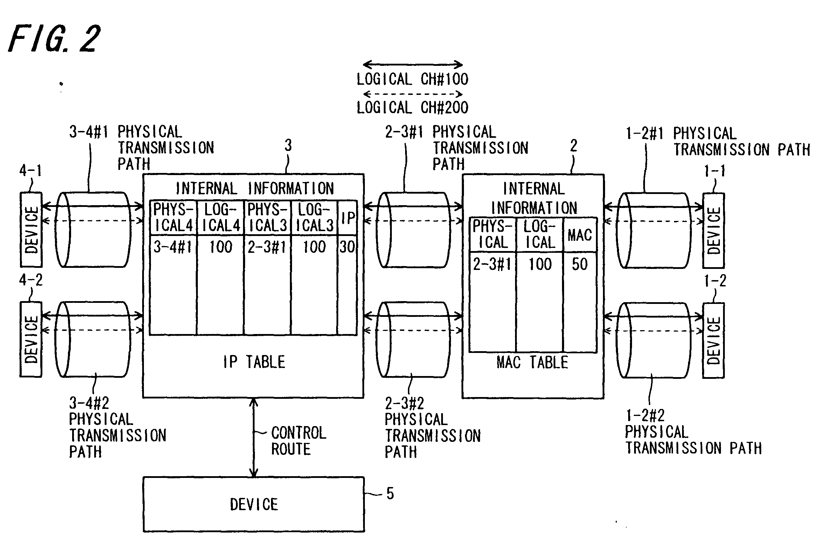

The configuration of an inter-network connection system according to an embodiment of the present invention will be described below. FIG. 2 is a block diagram of the inter-network connection system according to the embodiment of the present invention.

The present invention is an inter-network connection system. According to a characteristic feature of the present invention, the inter-network connection system comprising: a device 3 serving as an IP layer switching means for switching an arrival frame to a predetermined route according to an IP table in which physical transmission paths 3-4#1, 3-4#2, 2-3#1, and 2-3#2 and logical channels #100 and #200 corresponding to an IP address are recorded; and a device 2 serving as a MAC layer switching means for switching an arrival frame to a predetermined route according to a MAC table in which physical transmission paths 2-3#1, 2-3#2, 1-2#1, and 1-2#2 and a logical channel corresponding to a MAC address. Two physical transmission paths 2-3#1 and 2-3#2 are arranged between the device 3 and the device 2. Each time a frame from the device 2 arrives, the IP table updates self-table contents according to the IP address of the frame and the information of a physical transmission path 2-3#1 or 2-3#2 and a logical channel #100 or #200 through which the frame passes. Each time a frame from the device 3 arrives, the MAC table updates self-table contents according to the MAC address of the frame and the information of a physical transmission path 2-3#1 or 2-3#2 and a logical channel #100 or #200 through which the frame passes. A device 5 serving as a means for detecting fault generation of the physical transmission paths 2-3#1 and 2-3#2 is arranged, and the device 5 updates the IP table such that the physical transmission path 2-3#1 or 2-3#2 in which a fault is detected according to the detection result is bypassed is arranged.

The device 3 transmits normality acknowledge signals passing through the physical transmission paths 2-3#1 and 2-3#2 to the device 2 according to an instruction from the device 5, the device 2 transmits response signals of the normality acknowledge signals through the physical transmission paths 2-3#1 and 2-3#2 at which the normality acknowledge signals arrive, and the device 5 receives a report on the presence/absence of the response signals from the device 3 to check the normality of the physical transmission paths 2-3#1 and 2-3#2.

The device 5 measures traffics of the physical transmission paths 2-3#1 and 2-3#2. The device 5 can also update the IP table such that the physical transmission path 2-3#1 or 2-3#2 in which a traffic volume exceeding a threshold value according to the measurement result is bypassed.

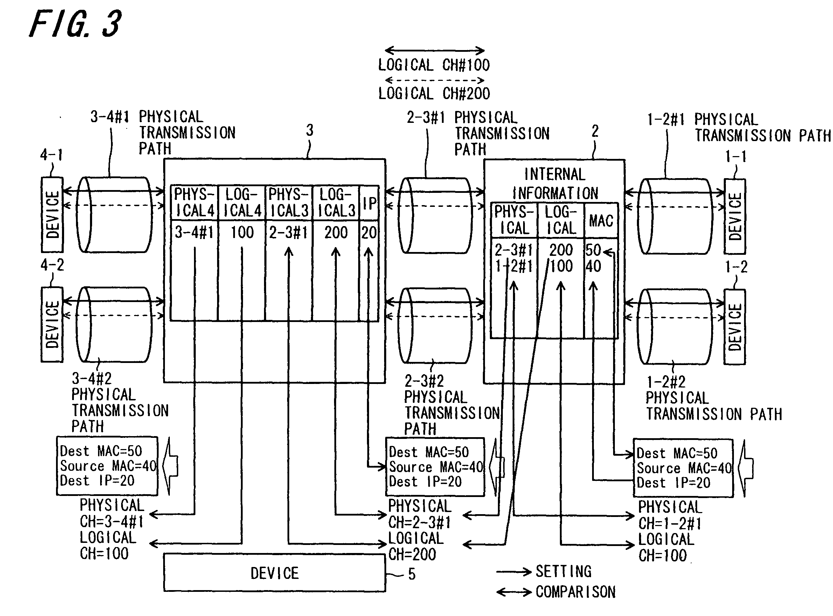

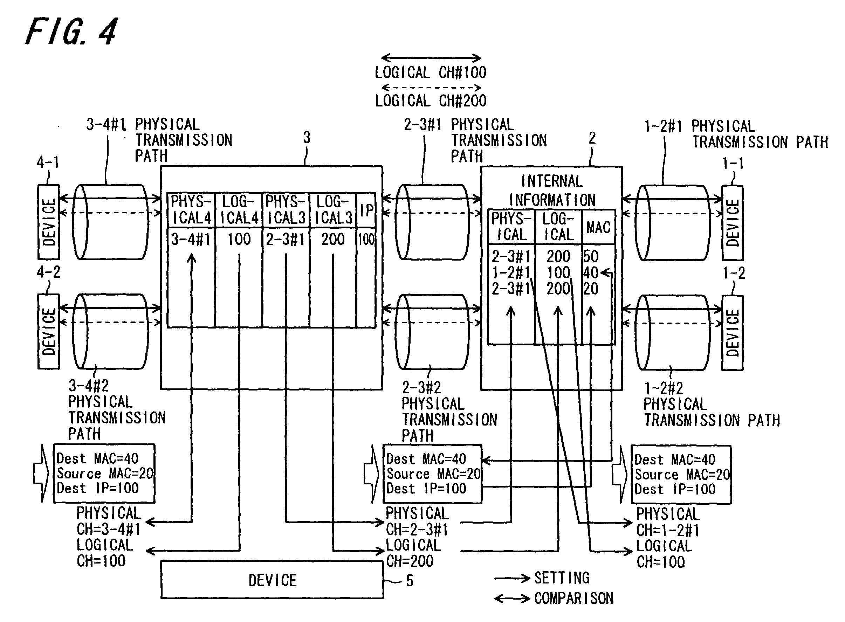

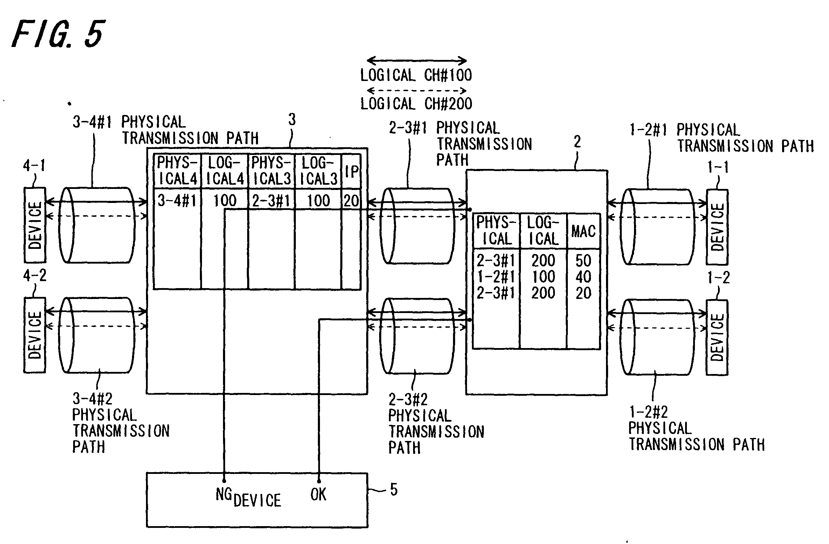

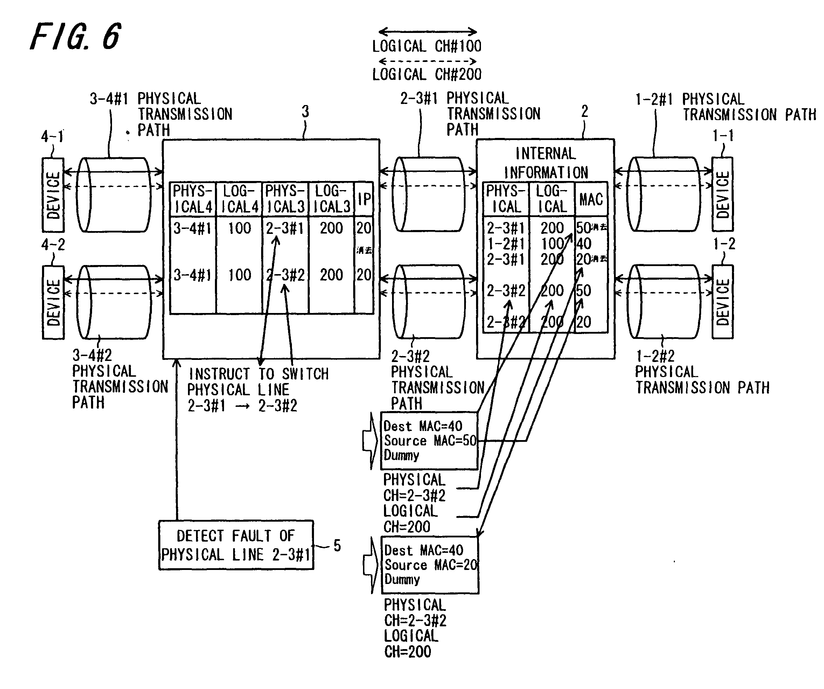

The operation of the inter-network connection system according to the embodiment of the present invention will be described below with reference to FIGS. 2 to 6. FIG. 3 is a block diagram for explaining an operation performed with a flow of information from the Internet to a private network in the inter-network connection system according to the embodiment of the present invention. FIG. 4 is a block diagram for explaining an operation performed with a flow of information from the private network to the Internet in the inter-network connection system according to the embodiment of the present invention. FIG. 5 is a block diagram for explaining a fault detection operation of a physical transmission path performed by a normality acknowledge signal. FIG. 6 is a block diagram for explaining a switching operation of physical transmission paths.

First, the operation performed with the flow of information from the Internet to the private network will be described below with reference to FIG. 3. When a frame from the Internet arrives at a device 1-1, the device 1-1 determines a MAC address to be given on the basis of a destination IP address of the arrival frame, and the device 1-1 gives the MAC address to the frame to transmit the frame to the device 2.

Each time a frame arrives, the device 2 records a correspondence between an arrival physical transmission path 1-2#1 or 1-2#2, a logical channel #100 or #200, and the transmission source MAC address of the arrival frame on a MAC table. For example, when the logical channel #100 and the frame of a transmission source MAC address 40 are received from the device 1-1, the physical transmission path 1-2#1, the logical channel #100, and the MAC address 40 are recorded such that the physical transmission path 1-2#1, the logical channel #100, and the MAC address 40 correspond to each other.

The transmission destination of the received frame is determined. The physical transmission path 2-3#1, the logical channel #200, and a MAC address 50 have been recorded such that the physical transmission path 2-3#1, the logical channel #200, and the MAC address 50 correspond to each other. When a destination MAC address of an arrival frame is 50, this frame is transmitted to the device 3 such that the physical transmission path 2-3#1 and the logical channel #200 are selected.

Each time a frame from the device 2 arrives, the device 3 determines a transmission destination of the frame. The physical transmission path 2-3#1, the logical channel #200, and an IP address 20 on the device 2 side and the physical transmission path 3-4#1 and the logical channel #100 on the private network side correspond to each other. When the frame is a frame of the IP address 20 received from the physical transmission path 2-3#1 and the logical channel #200 of the device 2, the frame is transmitted such that the physical transmission path 3-4#1 and the logical channel #100 on the private network side are selected. In the device 4-1, the form of a frame received from the device 3 is converted into a form which can be transmitted to the private network, and the frame is transmitted to the private network.

An operation performed with the flow of information from the private network to the Internet will be described below with reference to FIG. 4. A frame received from the private network is processed by the device 4-1 to convert the form of the frame into a form which can be transmitted to the Internet, and the frame is transmitted to the device 3.

In the device 3, the physical transmission path 2-3#1 and the logical channel #200 on the device 2 to be transmitted from the physical transmission path 3-4#1 and the logical channel #100 at which a frame arrives are selected to transmit the frame to the device 2.

In the device 2, each time a frame arrives, the correspondence between the arrival physical transmission path 2-3#1 and the transmission source MAC address 20 of the arrival frame is recorded on the MAC table. When the physical transmission path 2-3#1, the logical channel #200, and the frame of the transmission source MAC address 20 are received from the device 3, the physical transmission path 2-3#1, the logical channel #200, and the MAC address 20 are recorded such that the physical transmission path 2-3#1, the logical channel #200, and the MAC address 20 correspond to each other.

A transmission destination of a received frame is determined. When the correspondence between the physical transmission path 1-2#1, the logical channel #100, and the MAC address 40 has been recorded, and when a destination MAC address of an arrival frame is 40, the frame is transmitted to the device 1-1 by the physical transmission path 1-2#1 and the logical channel #100. In the device 1-1, the frame received from the device 2 is transmitted to the Internet.

A characteristic operation of the present invention will be described below with reference to FIGS. 5 and 6. As shown in FIG. 5, according to an instruction from the device 5, the device 3 transmits normality acknowledge signals to the physical transmission paths 2-3#1 and 2-3#2 to verify one route between the device 3 and the device 2. When the device 2 receives the normality acknowledge signals from the physical transmission paths 2-3#1 and 2-3#2, the device 2 returns response signals to the physical transmission paths at which the normality acknowledge signals arrive. The device 3 reports the presence/absence of the response signal from the device 2 for the normality acknowledge signal to the device 5. A case in which a fault is generated in the physical transmission path 2-3#1 will be described below.

The device 5 instructs the device 3 to transmit a frame which can update the physical transmission path 2-3#1 in which a fault of the MAC table into the physical transmission path 2-3#2 in the device 2. More specifically, the device 5 transmits an instruction for updating the physical transmission path 2-3#1 which causes an abnormality into the normal physical transmission path 2-3#2 in the IP table in the device 3. In this manner, the frame transmitted from the device 3 to the device 2, hereafter, passes through the normal physical transmission path 2-3#2. In the device 2, when the frame from the physical transmission path 2-3#2 arrives, a part corresponding to the physical transmission path 2-3#1 of the MAC table is updated into 2-3#2.

In this manner, when the IP table of the device 3 is updated, the MAC table of the device 2 can also be updated. For this reason, detection of fault generation can be performed at one position, and recovery from a fault can be achieved according to simple control for a short time.

In addition, the traffics of the physical transmission paths 2-3#1 and 2-3#2 are measured, and an IP table is updated such that the physical transmission path 2-3#1 or 2-3#2 in which a traffic volume exceeding a threshold value is bypassed. In this case, dynamic load dispersion can be realized depending on the traffic. More specifically, traffic measurement is performed at one position, and dispersion of traffics can be achieved according to simple control for a short time.

In the embodiment of the present invention, a configuration including two physical transmission paths is described. This configuration is to make it easy to understand the description. When three or more physical transmission paths are arranged, the same description as described above can be made.

As has been described above, according to the present invention, detection of fault generation is performed at one position, and recovery from a fault can be achieved according to simple control for a short time. In addition, traffic measurement is performed at one position, and dispersion of traffics can be achieved according to simple control for a short time.

Although the invention has been described with respect to specific embodiment for complete and clear disclosure, the appended claims are not to be thus limited but are to be construed as embodying all modifications and alternative constructions that may be occurred to one skilled in the art which fairly fall within the basic teaching here is set forth.

## Claims

1. An inter-network connection system comprising:
IP layer switching means for switching an arrival frame to a predetermined route according to an IP table in which a physical transmission path and a logical channel corresponding to an IP address are recorded; and
MAC layer switching means for switching an arrival frame to a predetermined route according to a MAC table in which a physical transmission path and a logical channel corresponding to a MAC address are recorded,
wherein a plurality of physical transmission paths are arranged between the IP layer switching means and the MAC layer switching means,
the IP table includes means for, each time a frame from the MAC layer switching means arrives, updating self-table contents according to the IP address of the frame and the information of a physical transmission path and a logical channel through which the frame passes,
the MAC table includes means for, each time a frame from the IP layer switching means arrives, updating self-table contents according to the MAC address of the frame and the information of a physical transmission path and a logical channel through which the frame passes,
means for detecting fault generation of the plurality of physical transmission paths is arranged, and
means for updating the IP table such that a physical transmission path in which a fault is detected according to the detection result is bypassed is arranged.

2. An inter-network connection system according to claim 1, wherein the IP layer switching means includes means for transmitting normality acknowledge signals passing through the plurality of physical transmission paths to the MAC layer switching means,
the MAC layer switching means includes means for transmitting response signals of the normality acknowledge signals through physical transmission paths at which the corresponding normality acknowledge signals arrive, and
the means for detecting fault generation includes means for checking the normality of the physical transmission path depending on the presence/absence of the response signal.

3. An inter-network connection system comprising:
IP layer switching means for switching an arrival frame to a predetermined route according to an IP table in which a physical transmission path and a logical channel corresponding to an IP address are recorded; and
MAC layer switching means for switching an arrival frame to a predetermined route according to a MAC table in which a physical transmission path and a logical channel corresponding to a MAC address are recorded,
wherein a plurality of physical transmission paths are arranged between the IP layer switching means and the MAC layer switching means,
the IP table includes means for, each time a frame from the MAC layer switching means arrives, updating self-table contents according to the IP address of the frame and the information of a physical transmission path and a logical channel through which the frame passes,
the MAC table includes means for, each time a frame from the IP layer switching means arrives, updating self-table contents according to the MAC address of the frame and the information of a physical transmission path and a logical channel through which the frame passes,
means for measuring the traffics of the plurality of physical transmission paths is arranged, and
means for updating the IP table such that a physical transmission path in which a traffic volume exceeding a threshold value is detected according to the measurement result is bypassed is arranged.
